# EUROPÄISCHE PATENTSCHRIFT

(11) **EP 0 288 735 B1**
(45) Veröffentlichungstag und Bekanntmachung des Hinweises auf die Patenterteilung: **23.02.1994**
(21) Anmeldenummer: 88104617.1
(22) Anmeldetag: 23.03.1988
(51) Int. Cl.: B27K 3/52, B27K 3/34, B27K 3/38

(54) **Mittel zum Konservieren von Holz und Holzwerkstoffen**
Agent for preserving wood and wooden materials
Agent pour la préservation du bois et des matériaux en bois

(30) Priorität: 28.04.1987 DE 3714051
(43) Veröffentlichungstag der Anmeldung: 02.11.1988
(73) Patentinhaber: DESOWAG Materialschutz GmbH, D-40417 Düsseldorf (DE)
(72) Erfinder: Metzner, Wolfgang, Dr., D-4150 Krefeld (DE); Seepe, Detlef, Dr., D-4150 Krefeld (DE)
(74) Vertreter: Seiler, Siegfried

(56) Entgegenhaltungen:
- EP-A- 0 139 142
- DE-A- 1 264 423
- DE-A- 3 435 675
- US-A- 4 510 074

## Beschreibung

Die vorliegende Erfindung betrifft die Verwendung eines Mittels zum Konservieren von Holz und Holzwerkstoffen auf der Basis mindestens eines Ammoniummonofluorphosphates, wobei das Holzkonservierungsmittel als Ammoniummonofluorphosphat ein organischchemisches Ammoniummonofluorphosphat und/oder ein organisch-chemisches Di-ammoniummonofluorphosphat enthält, das aus
a) Benzyl-Dimethyl-Alkyl(C₈-C₁₆)-ammoniummonofluorphosphat und/oder Dimethyl-Dialkyl(C₆-C₁₆)-ammoniummonofluorphosphat und/oder
b) aus einem Gemisch eines Salzes der Monofluorphosphorsäure in einem Lösemittel mit einem Benzyl-Dimethyl-Alkyl(c₈-C₁₆)-ammoniumsalz und/oder ein Dimethyl-Dialkyl(C₆-C₁₆)-ammoniumsalz und/oder
c) aus einem Gemisch von (a) und/oder (b) besteht, in Form einer 1 - 38 gew.-%igen wäßrigen oder organisch-chemischen Lösmittel enthaltenden Lösung des Holzschutzmittels im Tauch-, Streich-, Roll- oder Sprühverfahren oder im Druck-, und/oder Vakuum- oder Doppelvakuumverfahren mit einer 1,5 bis 7 gew.%-igen, wäßrigen Lösung des Holzschutzmittels zur Behandlung von Holz.

Organische Ammoniumfluorphosphate, deren Herstellung und deren Verwendung zur Kariesbekämpfung sind bereits aus der DE-OS 34 35 675 bekannt, während ein anderes Herstellungsverfahren in der DE-A-12 64 423 beschrieben ist.

Aus der DE-OS 33 36 557 (EP-A-0 139 142) ist bereits ein Mittel zum Konservieren von Holz und Holzwerkstoffen auf der Basis mindestens eines Fluor oder Fluorionen enthaltenden Alkalisalzes bekannt, wobei das Holzkonservierungsmittel als Fluor oder Fluorionen enthaltendes Alkalisalz, Alkalimonofluorphosphat und/oder Alkalidifluorphospat der allgemeinen Formel M₂PO₃F und/oder MPO₃F₂, in der M Natrium, Kalium und/oder Ammonium bedeutet, enthält oder daraus besteht. Dieses Holzkonservierungsmittel weist gute holzschützende Wirkungen auf. Unter Belastungen, z. B. bei Dauerbewitterung im Freien treten jedoch Wirkungsverminderungen auf und es kann nur in Gegenwart eines fixierenden Chromsalzes eine Fixierung erzielt werden.

In der US-A-45 10 074 hat man daher bereits vorgeschlagen, ganz bestimmte Alkylammoniumverbindungen in Form der Halogenverbindungen, Sulfite, Azetate und dergleichen einzusetzten und in Kombination mit Salzen von Polysäuren, z. B. Alkalitripolyphosphat, Natriummolybdat und dergleichen zu kombinieren und als Holzschutzmittel zu verwenden. Diese Mittel sind jedoch nicht ausreichend lagerstabil und weisen keine besonders guten Wirkungen gegenüber Pilzen und holzzerstörenden Insekten auf. Bestimmte Kombinationen dieser Verbindung sind jedoch auch gesundheitlich bedenklich.

Ziel und Aufgabe der vorliegenden Erfindung war es daher, ein verbessertes, insbesondere chromatfreies Holzschutzmittel zu finden, das sowohl fungizide als auch insektizide Wirkungen mit einer Wirkungssteigerung aufweist und auch eine verbesserte Dauerwirkung unter Belastung (Fixierungen) besitzt.

Weiterhin sollte das Mittel mindestens in einigen organisch-chemischen Lösungsmitteln sowie in Wasser löslich sein, damit der Anwendungsbereich erweitert werden kann.

Erfindungsgemäß wurde festgestellt, daß diesen Zielen und Aufgaben die Verwendung eines Mittels zum Konservieren von Holz und Holzwerkstoffen auf der Basis mindestens eines bestimmten Ammoniummonofluorphosphates gerecht wird, das aus
a) Benzyl-Dimethyl-Alkyl(C₈-C₁₆)-ammoniummonofluorphosphat und/oder Dimethyl-Dialkyl(C₆-C₁₆)-ammoniummonofluorphosphat und/oder
b) aus einem Gemisch eines Salzes der Monofluorphosphorsäure in einem Lösemittel mit einem Benzyl-Dimethyl-Alkyl(C₈-C₁₆)-ammoniumsalz und/oder ein Dimethyl-Dialkyl(C₆-C₁₆)-ammoniumsalz und/oder
c) aus einem Gemisch von (a) und/oder (b) besteht und in Form einer 1 - 38 gew.-%igen wäßrigen oder organisch-chemischen Lösemittel enthaltenden Lösung des Holzschutzmittels im Tauch-, Streich-, Roll- oder Sprühverfahren oder im Druck- und/oder Vakuum- oder Doppelvakuumverfahren mit eine 1,5 bis 7 gew.%-igen, wäßrigen Lösung des Holzschutzmittels zur Behandlung von Holz verwendet wird.

Nach einer bevorzugten Ausführungsform wird das Mittel zum Konservieren von Holz zusätzlich mit mindestens einer bioziden und/oder feuerhemmenden chemischen Verbindung oder einem Verbindungsgemisch verwendet, das als mindestens einen Bestandteil eine biozide und/oder feuerhemmende chemische Verbindung besitzt und/oder mindestens ein Netzmittel, Emulgator, Farbstoff und/oder Pigment enthält.

Nach einer weiteren bevorzugten Ausführungsform besteht das Holzkonservierungsmittel aus
99,95 bis 94 Gew.-%, vorzugsweise
99,8 bis 96 Gew.-%
a, b und/oder c und
0,05 bis 6 Gew.-%, vorzugsweise
0,2 bis 4 Gew.-%,
mindestens eines Netzmittels, Emulgators, Farbstoffes und/oder Pigmenten oder enthält diese Bestandteile und ist mit dem Lösemittel auf die Anwendungskonzentration eingestellt.

Nach einer anderen bevorzugten Ausführungsform besteht das verwendete Holzkonservierungsmittel aus einem Gemisch von
0,1 bis 80 Gew.-%, vorzugsweise
10 bis 75 Gew.-%,
mindestens einem Ammoniummonfluorphosphat von a, b und/oder c und
99,85 bis 15 Gew.-%, vorzugsweise
89,9 bis 22 Gew.-%,
mindestens einer bioziden und/oder feuerhemmenden chemischen Verbindung oder einem Verbindungsgemisch, das als mindestens ein Bestandteil eine biozide und/oder feuerhemmende chemische Verbindung enthält, und
0,05 bis 5 Gew.-%, vorzugsweise
0,2 bis 3 Gew.-%,
mindestens einem Netzmittel, Emulgator, Farbstoff und/oder Pigment enthält oder daraus besteht. Dieses Mittel wird mit dem Lösemittel auf die Anwendungskonzentration eingestellt.

Das verwendete Holzkonservierungsmittel enthält somit vorzugsweise als biozide und/oder feuerhemmende Verbindung zusätzlich mindestens eine biozide anorganisch-chemische oder organisch-chemische Verbindung und/oder eine feuer-hemmende anoganisch-chemische Verbindung oder ein anorganisch-chemisches und/oder organisch-chemisches Verbindungsgemisch, das als mindestens ein Bestandteil eine biozide und/oder feuerhemmende anorganisch-chemische Verbindung besitzt.

Als biozide und/oder feuerhemmende anorganisch-chemische Verbindung enthält das verwendete Holzkonservierungsmittel mindestens ein wasserlösliches Alkalisalz und/oder wasserschwerlösliches oder wasserunlösliches Salz, vorzugsweise Alkalisalz und/oder Ammoniumsalz der Phosphorsäure, Polyphosphorsäure, Fluorwasserstoffsäure, Borsäure, Borfluorwasserstoffsäure und/oder ein Ammonium-, Magnesium-, Kupfer- und/oder Zinksalz vorzugsweise -Chlorid, -Sulfat, -Fluorid, -silikofluorid oder eine deren Salze oder Verbindungen mit Borsäure, Phosphorsäure, Borfluorwasserstoffsäure und/oder ein wasserlösliches Kupfersalz, Zinksalz oder eine oder mehrere dieser Verbindungen.

Nach einer weiteren Ausführungsform der erfindungsgemäßen Verwendung wird als biozide Verbindung zusätzlich mindestens eine biozide organisch-chemische Verbindung oder ein biozides organisch-chemisches Verbindungsgemisch, das als mindestens ein Bestandteil eine biozide organisch-chemische Verbindung besitzt, eingesetzt, wobei die organischchemische Verbindung aus mindestens einem wasserunlöslichen, jedoch in einem organisch-chemischen Lösungsmittel oder Lösungsmittelgemisch löslichen organisch-chemischen Fungizid und/oder Insektizid besteht sowie mindestens ein Emulgator, Netzmittel Farbstoff und/oder Pigment und ein organisch-chemisches Lösungsmittel oder Lösungsmittelgemisch enthält.

Nach einer weiteren bevorzugten Ausführungsform beträgt das Gewichtsverhältnis des Gemisches a) und/oder b) zu Alkali- oder Ammoniumfluorphosphat der allgemeinen Formel M₂PO₃F
20 : 1 bis 1 : 20, vorzugsweise
10 : 1 bis 1 : 10.

Nach einer bevorzugten Ausführungsform wird das Holzschutzmittel verwendet, um das Holz im Druck- und/oder Vakuum- oder Doppelvakuumverfahren mit einer 2 bis 5 gew.-%igen, wäßrigen und/oder organisch-chemischen Lösung des Holzschutzmittels zu behandeln.

Im Tauch-, Streich-, Roll- oder Sprühverfahren wird vorzugsweise eine 2 bis 25 gew.-%ige wäßrige oder organisch-chemische Lösemittel enthaltende Lösung zur Holzschutzbehandlung verwendet.

### Beispiele für die Verwendung des Mittels zum Konservieren von Holz

### Beispiel 1

30 g Benzyl-Dimethyl-Alkyl (C₁₂ - C₁₄) - Ammoniumchlorid
6 g Na₂PO₃F werden in
74 g Wasser bei 19° gelöst.

Es ergibt sich eine klare Lösung. Die so erhaltene 36%-ige Lösung des Holzkonservierungsmittels wurde im Tauchverfahren zur Holzkonservierung eingesetzt.

### Beispiel 2

29 g Benzyl-Dimethyl-Alkyl (C₁₂ - C₁₄) - Ammoniumchlorid
10 g Na₂PO₃F
2 g H₃BO₃
58 g Wasser

### Beispiel 3

18 g Benzyl-Dimethyl-Alkyl (C₁₂ - C₁₄) - Ammoniumchlorid
10 g (NH₄)₂PO₃F
1 g H₃BO₃
1 g Netzmittel
68 g Wasser

## Patentansprüche

1. Verwendung eines Mittels zum Konservieren von Holz und Holzwerkstoffen auf der Basis mindestens eines Ammoniummonofluorphosphates, wobei das Holzkonservierungsmittel als Ammoniummonofluorphosphat ein organisch-chemisches Ammoniummonofluorphosphat und/oder ein organisch-chemisches Di-ammoniummonofluorphosphat enthält, das aus
a) Benzyl-Dimethyl-Alkyl(C₈-C₁₆)-ammoniummonofluorphosphat und/oder Dimethyl-Dialkyl-(C₆-C₁₆)-ammoniummonofluorphosphat und/oder
b) aus einem Gemisch eines Salzes der Monofluorphosphorsäure in einem Lösemittel mit einem Benzyl-Dimethyl-Alkyl (C₈-C₁₆)-ammoniumsalz und/oder ein Dimethyl-Dialkyl(C₆-C₁₆)-ammoniumsalz und/oder
c) aus einem Gemisch von a) und/oder b) besteht, in Form einer 1 - 38 gew.-%igen wäßrigen oder organisch-chemischen Lösemittel enthaltenden Lösung des Holzschutzmittels im Tauch-, Streich-, Roll- oder Sprühverfahren oder im Druck- und/oder Vakuum- oder Doppelvakuumverfahren mit einer 1,5 bis 7 gew.%-igen, wäßrigen Lösung des Holzschutzmittels zur Behandlung von Holz.

2. Verwendung des Mittels zum Konservieren von Holz und Holzwerkstoffen nach Anspruch 1, dadurch gekennzeichnet, daß das Holzkonservierungsmittel zusätzlich mindestens eine biozide und/oder feuerhemmende chemische Verbindung oder ein Verbindungsgemisch, das als mindestens einen Bestandteil eine biozide und/oder feuerhemmende chemische Verbindung besitzt und/oder mindestens ein Netzmittel, Emulgator, Farbstoff und/oder Pigment enthält.

3. Verwendung des Mittels zum Konservieren von Holz und Holzwerkstoffen nach Ansprüchen 1 oder 2, dadurch gekennzeichnet, daß das Holzkonservierungsmittel
99,95 bis 94 Gew.-%, vorzugsweise
99,8 bis 96 Gew.-%,
a, b und/oder c und
0,05 bis 6 Gew.-%, vorzugsweise
0,2 bis 4 Gew.-%,
mindestens eines Netzmittels, Emulgators, Farbstoffes und/oder Pigmentes enthält oder daraus besteht, und mit dem Lösemittel auf die Anwendungskonzentration eingestellt ist.

4. Verwendung des Mittels zum Konservieren von Holz und Holzwerkstoffen nach einem oder mehreren der Ansprüche 1 bis 3, dadurch gekennzeichnet, daß das Holzkonservierungsmittel aus einem Gemisch von
0,1 bis 80 Gew.-%, vorzugsweise
10 bis 75 Gew.-%,
mindestens einem Ammoniummonofluorphosphat von a, b und/oder c und
99,85 bis 15 Gew.-%, vorzugsweise
89,9 bis 22 Gew.-%,
mindestens einer bioziden und/oder feuerhemmenden chemischen Verbindung oder einem Verbindungsgemisch, das als mindestens ein Bestandteil eine biozide und/oder feuerhemmende chemische Verbindung enthält, und
0,05 bis 5 Gew.-%, vorzugsweise
0,2 bis 3 Gew.-%,
mindestens einem Netzmittel, Emulgator, Farbstoff und/oder Pigment enthält oder daraus besteht, und mit dem Lösemittel auf die Anwendungskonzentration eingestellt ist.

5. Verwendung des Mittels zum Konservieren von Holz und Holzwerkstoffen nach einem oder mehreren der Ansprüche 1 bis 4, dadurch gekennzeichnet, daß das Holzkonservierungsmittel als biozide und/oder feuerhemmende Verbindung zusätzlich mindestens eine biozide anorganischchemische oder organisch-chemische Verbindung und/oder eine feuerhemmende anorganisch-chemische Verbindung oder ein anorganisch-chemisches und/oder organisch-chemisches Verbindungsgemisch, das als mindestens ein Bestandteil eine biozide und/oder feuerhemmende anorganisch-chemische Verbindung besitzt, enthält.

6. Verwendung eines Mittels zum Konservieren von Holz und Holzwerkstoffen nach einem oder mehreren der Ansprüche 1 bis 5, dadurch gekennzeichnet, daß als biozide und/oder feuerhemmende anorganisch-chemische Verbindung das Holzkonservierungsmittel mindestens ein wasserlösliches Alkalisalz und/oder wasserschwerlösliches oder wasserunlösliches Salz, vorzugsweise Alkalisalz und/oder Ammoniumsalz der Phosphorsäure, Polyphosphorsäure, Fluorwasserstoffsäure, Borsäure, Borfluorwasserstoffsäure und/oder ein Ammonium-, Magnesium-, Kupfer- und/oder Zinksalz vorzugsweise -Chlorid, -Sulfat, -Fluorid, -silikofluorid oder eine deren Salze oder Verbindungen mit Borsäure, Phosphorsäure, Borfluorwasserstoffsäure und/oder ein wasserlösliches oder wasserunlösliches Kupfersalz, Zinksalz oder eine oder mehrere dieser Verbindungen direkt oder als Bestandteil des Verbindungsgemisches enthält.

7. Verwendung des Mittels zum Konservieren von Holz und Holzwerkstoffen nach einem oder mehreren der Ansprüche 1 bis 6, dadurch gekennzeichnet, daß das Holzkonservierungsmittel als biozide Verbindung zusätzliche mindestens eine biozide organisch-chemische Verbindung oder ein organisch-chemisches Verbindungsgemisch, das als mindestens ein Bestandteil eine biozide organisch-chemische Verbindung besitzt, enthält, wobei die organisch-chemische Verbindung aus mindestens einem wasserunlöslichen, jedoch in einem organisch-chemischen Lösungsmittel oder Lösungsmittelgemisch löslichen organischchemischen Fungizid und/oder Insektizid besteht sowie mindestens ein Emulgator, Netzmittel, Farbstoff und/oder Pigment und ein organisch-chemisches Lösungsmittel oder Lösungsmittelgemisch enthält.

8. Verwendung des Mittels zum Konservieren von Holz und Holzwerkstoffen nach einem oder mehreren der Ansprüche 1 bis 7, dadurch gekennzeichnet, daß das Gemisch von a) und/oder b) zu Alkali- oder Ammoniumfluorphosphat der allgemeinen Formel M₂PO₃F 20 : 1 bis 1 : 20, vorzugsweise 10 : 1 bis 1 : 10 beträgt.

## Claims

1. The use of an agent for preserving wood and timber materials on the basis of at least one ammonium monofluorophosphate, in which the wood preservation agent contains as ammonium monofluorophosphate an organic-chemical ammonium monofluorophosphate and/or an organic-chemical di-ammonium monofluorophosphate which consists of
a) benzyl-dimethyl-alkyl(C₈-C₁₆)-ammonium monofluorophosphate and/or dimethyl-dialkyl-(C₆-C₁₆)-ammonium monofluorophosphate and/or
b) of a mixture of a salt of monofluorophosphoric acid in a solvent with a benzyl-dimethyl-alkyl(C₈-C₁₆)-ammonium salt and/or a dimethyl-dialkyl-(C₆-C₁₆)-ammonium salt and/or
c) of a mixture of a) and b), in the form of a 1-38% by weight aqueous or organic-chemical, solvent-containing solution of the wood protection agent in a dipping, painting, rolling or spraying process or in a pressure and/or vacuum or double-vacuum process with a 1.5 to 7% by weight aqueous solution of the wood protection agent for the treatment of wood.

2. The use of the agent for preserving wood and timber materials according to Claim 1, characterised in that the wood preservation agent additionally contains at least one biocidal and/or fire-retardant chemical compound or a mixture of compounds which has as at least one constituent a biocidal and/or fire-retardant chemical compound and/or at least one wetting agent, emulsifier, dye and/or pigment.

3. The use of the agent for preserving wood and timber materials according to Claims 1 or 2, characterised in that the wood preservation agent contains or consists of
99.95 to 94% by weight, preferably
99.8 to 96% by weight,
of a, b and/or c and
0.05 to 6% by weight, preferably
0.2 to 4% by weight,
of at least one wetting agent, emulsifier, dye and/or pigment, and is set to the concentration for application using the solvent.

4. The use of the agent for preserving wood and timber materials according to one or more of Claims 1 to 3, characterised in that the wood preservation agent consists of or contains a mixture of
0.1 to 80% by weight, preferably
10 to 75% by weight,
of at least one ammonium monofluorophosphate of a, b and/or c and
99.85 to 15% by weight, preferably
89.9 to 22% by weight,
of at least one biocidal and/or fire-retardant chemical compound or a mixture of compounds which contains as at least one constituent a biocidal and/or fire-retardant chemical compound, and
0.05 to 5% by weight, preferably
0.2 to 3% by weight,
of at least one wetting agent, emulsifier, dye and/or pigment, and is set to the concentration for application using the solvent.

5. The use of the agent for preserving wood and timber materials according to one or more of Claims 1 to 4, characterised in that the wood preservation agent contains as biocidal and/or fire-retardant compound additionally at least one biocidal inorganic-chemical or organic-chemical compound and/or a fire-retardant inorganic-chemical compound or an inorganic-chemical and/or organic-chemical mixture of compounds which has as at least one constituent a biocidal and/or fire-retardant inorganic-chemical compound.

6. The use of an agent for preserving wood and timber materials according to one or more of Claims 1 to 5, characterised in that the wood preservation agent contains as the biocidal and/or fire-retardant inorganic-chemical compound at least one water-soluble alkali salt and/or sparingly water-soluble or water-insoluble salt, preferably alkali salt and/or ammonium salt of phosphoric acid, polyphosphoric acid, hydrofluoric acid, boric acid, tetrafluoroboric acid and/or an ammonium, magnesium, copper and/or zinc salt, preferably chloride, sulphate, fluoride, silicofluoride or a salt or compound thereof with boric acid, phosphoric acid, tetrafluoroboric acid and/or a water-soluble or water-insoluble copper salt, zinc salt or one or more of these compounds, directly or as a constituent of the mixture of compounds.

7. The use of the agent for preserving wood and timber materials according to one or more of Claims 1 to 6, characterised in that the wood preservation agent additionally contains as the biocidal compound at least one biocidal organic-chemical compound or an organic-chemical mixture of compounds which has as at least one constituent a biocidal organic-chemical compound, the organic-chemical compound consisting of at least one organic-chemical fungicide and/or insecticide which is water-insoluble but is soluble in an organic-chemical solvent or solvent mixture, and containing at least one emulsifier, wetting agent, dye and/or pigment and an organic-chemical solvent or solvent mixture.

8. The use of the agent for preserving wood and timber materials according to one or more of Claims 1 to 7, characterised in that the mixture of a) and/or b) to alkali fluorophosphate or ammonium fluorophosphate of the general formula M₂PO₃F is 20 : 1 to 1 : 20, preferably 10 : 1 to 1 : 10.

## Revendications

1. Utilisation d'un agent pour la conservation ou la préservation du bois et de matériaux en bois, à base d'au moins un monofluorophosphate d'ammonium, l'agent de conservation du bois contenant, à titre de monofluorophosphate d'ammonium, un monofluorophosphate d'ammonium chimique organique et/ou un monofluorophosphate de diammonium chimique organique, qui consiste en :
(a) du monofluorophosphate de benzyl-diméthylalkyl(en C₈ à C₁₆) -ammonium et/ou en du monofluorophosphate de diméthyl-dialkyl (en C₆ à C₁₆)-ammonium, et/ou
(b) en un mélange d'un sel de l'acide monofluorophosphorique dans un solvant avec un sel de benzyl-diméthyl-alkyl (en C₈ à C₁₆)-ammonium et/ou un sel de diméthyl-dialkyl- (en C₆ à C₁₆)-ammonium, et/ou
(c) en un mélange de (a) et/ou (b), sous forme d'une solution aqueuse ou contenant du solvant chimique organique et contenant 1 à 38 % en poids de l'agent de protection du bois, l'application étant réalisée par un procédé d'immersion, d'étalement au pinceau, d'étalement au rouleau ou par projection de pulvérisation ou dans un procédé sous pression et/ou sous vide ou sous double vide avec une solution aqueuse contenant 1,5 à 7 % en poids de l'agent de protection du bois, pour le traitement du bois.

2. Utilisation de l'agent de conservation du bois et des matériaux en bois selon la revendication 1, caractérisée en ce que l'agent de conservation du bois contient en outre au moins un composé chimique biocide et/ou inhibant le feu (ignifuge) ou un mélange de composés contenant, à titre d'au moins un constituant, un composé chimique biocide et/ou ignifuge et/ou au moins un mouillant, un émulsifiant, un colorant et/ou un pigment.

3. Utilisation de l'agent pour la conservation du bois et des matériaux en bois selon les revendications 1 ou 2, caractérisée en ce que l'agent de conservation du bois contient, ou consiste en 99,95 à 94 % en poids, avantageusement 99,8 à 96 % en poids de a, b et/ou c, et 0,05 à 6 % en poids, avantageusement 0,2 à 4 % en poids d'au moins un mouillant, un émulsifiant, un colorant et/ou un pigment, cet agent étant ajusté, à l'aide du solvant, à la concentration voulue pour son application.

4. Utilisation de l'agent pour la conservation du bois et des matériaux en bois selon une ou plusieurs des revendications 1 à 3, caractérisée en ce que l'agent de conservation du bois contient, ou consiste en, un mélange de 0,1 à 80 % en poids, avantageusement 10 à 75 % en poids d'au moins un monofluorophosphate d'ammonium de a, b, et/ou c, et 99,85 à 15 % en poids, avantageusement 89,9 à 22 % en poids d'au moins un composé chimique à rôle biocide et/ou ignifuge ou d'un mélange de composés chimiques qui comporte à titre d'au moins un constituant, un composé chimique biocide et/ou ignifuge, et 0,05 à 5 % en poids, avantageusement 0,2 à 3% en poids d'au moins un mouillant, un émulsifiant, un colorant et/ou un pigment, la concentration de l'agent ayant été ajustée à l'aide du solvant à la concentration voulue pour son application.

5. Utilisation de l'agent pour la conservation du bois et des matériaux en bois selon une ou plusieurs des revendications 1 à 4, caractérisé en ce que l'agent de conservation du bois contient comme composé biocide et/ou ignifuge, en outre au moins un composé chimique minéral ou un composé chimique organique biocide et/ou un composé chimique mineral ignifuge ou un mélange de composes chimiques minéraux et/ou de composés chimiques organiques, comportant, à titre d'au moins un constituant, un composé chimique minéral biocide et/ou ignifuge.

6. Utilisation d'un agent pour la conservation du bois et des matériaux en bois selon une ou plusieurs des revendications 1 à 5, caractérisé en ce que l'agent de conservation du bois contient, à titre de composé chimique minéral biocide et/ou ignifuge au moins un sel alcalin hydrosoluble et/ou un sel peu soluble ou insoluble dans l'eau, avantageusement un sel alcalin et/ou un sel d'ammonium de l'acide phosphorique, d'un acide polyphosphorique, de l'acide fluorhydrique, de l'acide borique, de l'acide borofluorhydrique et/ou un sel, avantageusement un chlorure, sulfate, fluorure, silico- fluorure d'ammonium, de magnésium, de cuivre/ou de zinc ou un de leurs sels ou composés avec l'acide borique, l'acide phosphorique, l'acide borofluorhydrique et/ou un sel de cuivre hydrosoluble ou insoluble dans l'eau, un sel de zinc ou un ou plusieurs de ces composés, directement ou à titre de constituant du mélange des composés.

7. Utilisation de l'agent de conservation du bois et des matériaux en bois selon une ou plusieurs des revendications 1 à 6, caractérisée en ce que l'agent de conservation du bois contient comme composé biocide, en outre, au moins un composé chimique organique biocide ou un mélange de composés chimiques organiques biocides, comportant, à titre d'au moins un constituant, un composé chimique organique biocide, le Composé chimique organique consistant en un moins un fongicide et/ou un insecticide chimique organique insoluble dans l'eau mais soluble dans un solvant chimique organique ou dans un mélange de solvants chimiques organiques, ainsi qu'au moins un émulsifiant, un mouillant, un colorant et/ou un pigment et un solvant chimique organique ou un mélange de solvants chimiques organiques.

8. Utilisation de l'agent pour la conservation du bois et des matériaux en bois, selon une ou plusieurs des revendications 1 à 7, caractérisée en ce que le rapport entre le mélange de a et/ou b, par rapport au fluorophosphate alcalin ou d'ammonium de formule générale M₂PO₃F vaut 20:1 à 1:20, avantageusement 10:1 à 1:10.
